# EUROPÄISCHE PATENTSCHRIFT

(11) **EP 1 771 644 B1**
(45) Veröffentlichungstag und Bekanntmachung des Hinweises auf die Patenterteilung: **24.06.2009**
(21) Anmeldenummer: 05772806.5
(22) Anmeldetag: 16.07.2005
(51) Int. Cl.: F01N 3/023, F01N 3/20

(54) **ABGASSYSTEM, INSBESONDERE FÜR EINE BRENNKRAFTMASCHINE EINES KRAFTFAHRZEUGS**
EXHAUST GAS SYSTEM, IN PARTICULAR FOR THE INTERNAL COMBUSTION ENGINE OF A MOTOR VEHICLE
SYSTEME D'ECHAPPEMENT, NOTAMMENT POUR UN MOTEUR A COMBUSTION INTERNE D'UN VEHICULE A MOTEUR

(30) Priorität: 24.07.2004 DE 102004036036
(43) Veröffentlichungstag der Anmeldung: 11.04.2007
(73) Patentinhaber: Daimler AG, 70327 Stuttgart (DE)
(72) Erfinder: BRAUN, Tillmann, 73663 Berglen (DE); SCHARR, Detlef, 71397 Leutenbach (DE)
(74) Vertreter: Moore, Derek
(86) Internationale Anmeldenummer: PCT/EP2005/007765
(87) Internationale Veröffentlichungsnummer: WO 2006/010506

(56) Entgegenhaltungen:
- EP-A- 0 907 010
- EP-A- 1 217 196
- EP-A- 1 357 267
- WO-A-97/01387
- DE-A1- 10 152 187
- DE-A1- 10 300 298

## Beschreibung

Die Erfindung betrifft ein Abgassystem, insbesondere für eine Brennkraftmaschine eines Kraftfahrzeugs, mit den Merkmalen des Oberbegriffs des Anspruchs 1.

Aus der WO 99/39809 A1 ist ein Abgassystem bekannt, welches in dieser Reihenfolge einen Oxidationskatalysator, einen Partikelfilter und einen SCR-Katalysator zur Stickoxidentfernung in der Abgasleitung aufweist. Ferner ist eine Reduktionsmittelversorgung zur Zugabe von Ammoniak oder Harnstofflösung eingangsseitig des SCR-Katalysators vorgesehen. Mit diesem Abgassystem können sowohl Partikel als auch Stickoxide und unverbrannte Kraftstoffbestandteile aus dem Abgas einer Brennkraftmaschine entfernt werden. Dabei erfolgt durch den Oxidationskatalysator je nach Abgasbedingungen in mehr oder weniger starkem Umfang eine Oxidation von Stickstoffmonoxid (NO) zu Stickstoffdioxid (NO₂). Das gebildete NO₂ oxidiert wiederum im Partikelfilter abgelagerten Ruß, was einer kontinuierlichen Partikelfilterregeneration entspricht. Allerdings sind sowohl die Stickoxidentfernung als auch die Rußentfernung über gebildetes NO₂ stark von den vorherrschenden Temperatur- und Durchsatzverhältnissen abhängig.

EP 1 357 267 A2 offenbart ein Abgassystem, in dessen Abgasleitung hintereinander eine Abgasreinigungseinrichtung und ein SCR-Katalysator als Stickoxid-Reduktionskatalysator angeordnet sind. Für die als Oxidationskatalysator ausgebildete Abgasreinigungseinrichtung ist eine diesen umgehende Bypassleitung vorgesehen, welche zwischen der Abgasreinigungseinrichtung und dem SCR-Katalysator wieder in die Abgasleitung einmündet. Weiter ist eine Reduktionsmittelzugabeeinrichtung zur Zugabe von Harnstoff als Reduktionsmittel in die Bypassleitung vorgesehen. Zugegebener Harnstoff wird einem stromab von der Reduktionsmittelzugabestelle in der Bypassleitung angeordneten Hydrolysekatalysator zugeführt, durch welchen eine Umsetzung des Harnstoffs in Ammoniak bewirkt wird.

Aus der EP 0 907 010 A2 ist ein Abgassystem bekannt, in dessen Hauptabgasleitung ein SCR- bzw. DeNOx-Katalysator als Stickoxid-Reduktionskatalysator angeordnet ist. Für die Hauptabgasleitung ist stromauf des Stickoxid-Reduktionskatalysators eine Bypassleitung vorgesehen, in welcher ein Adsorptionskatalysator mit einem vorgeschalteten Hydrolysekatalysator angeordnet ist. Weiter ist als Reduktionsmittelzugabeeinrichtung eine Einspritzdüse zur Zugabe von Reduktionsmittel in die Bypassleitung eingangsseitig des Hydrolysekatalysators vorgesehen. Der von der Bypassleitung umgangene Teil der Hauptabgasleitung ist als Leerrohr ausgebildet.

EP 1 217 196 A2 offenbart ein Abgassystem mit einem als Stickoxid-Speicherkatalysator ausgebildeten Stickoxid-Reduktionskatalysator, dem in einer seriellen Anordnung ein Oxidationskatalysator und ein Dieselpartikelfilter vorgeschaltet sind. Der Oxidationskatalysator ist mittels einer als Leerrohr ausgebildeten Bypassleitung umgehbar.

Aus der WO 97/01387 A1 ist eine Abgasreinigungseinrichtung mit einem Stickoxid-Reduktionskatalysator bekannt, bei der zur Anreicherung des Abgases mit einem Reduktionsmittel eine Reduktionsmittelzugabeeinrichtung stromauf des Stickoxid-Reduktionsmittelkatalysators vorgesehen ist. Über einen als Umwandlungs- und Mischkanal fungierenden Abgasleitungsabschnitt wird das mit Reduktionsmittel versetzte Abgas dem Stickoxid-Reduktionskatalysator zugeführt. Zur Verbesserung der Aufbereitung des als Reduktionsmittel vorzugsweise eingesetzten Harnstoffs kann in dem Umwandlungs- und Mischkanal ein Hydrolysekatalysator angeordnet sein, womit die Länge dieses Leitungsabschnitts geringer ausfallen kann.

Aufgabe der Erfindung ist es, ein insbesondere in Bezug auf eine Stickoxidreinigungsfunktion wirksames Abgassystem anzugeben, welches einen vereinfachten Aufbau aufweist.

Das erfindungsgemäße Abgassystem weist einen in einer Abgasleitung der Brennkraftmaschine angeordneten Stickoxid-Reduktionskatalysator und eine stromauf des Stickoxid-Reduktionskatalysators angeordnete weitere Abgasreinigungseinrichtung auf. Weiter ist eine Bypassleitung vorgesehen, welche an einer Abzweigestelle stromauf der Abgasreinigungseinrichtung von der Abgasleitung abzweigt und stromab der Abgasreinigungseinrichtung und stromauf des Stickoxid-Reduktionskatalysators an einer Einmündestelle wieder in die Abgasleitung einmündet. Ferner ist eine Reduktionsmittelzugabeeinrichtung zur Zugabe eines Reduktionsmittels in die Bypassleitung vorgesehen. Erfindungsgemäß ist die Bypassleitung als Leerrohr ausgeführt und in der Bypassleitung ist ein verstellbares Drosselelement abgeordnet.

Der Stickoxid-Reduktionskatalysator ist vorzugsweise als SCR-Katalysator ausgebildet, der zur katalytischen Umsetzung von Stickoxiden mit einem selektiven Reduktionsmittel geeignet ist. Als Reduktionsmittel kommt hauptsächlich ein flüssiges, reduzierend wirkendes Medium wie beispielsweise ein Kohlenwasserstoff oder eine Harnstoff-Wasserlösung in Betracht. Die Abgasreinigungseinrichtung kann eines oder mehrere weitere Reinigungselemente umfassen, welche zur weiteren Abgasreinigung geeignet sind.

Die wenigstens teilweise Umgehung der Abgasreinigungseinrichtung ermöglicht es einerseits, den Abgasmengenstrom durch die Abgasreinigungseinrichtung gezielt zu beeinflussen, so dass diese nicht überlastet ist. Andererseits ist es ermöglicht, die Abgaszusammensetzung des dem Stickoxid-Reduktionskatalysator zugeführten Abgases zu beeinflussen, und so dessen Wirksamkeit zu steigern. Beispielsweise kann durch die Umgehung der dem Stickoxid-Reduktionskatalysator vorgeschalteten Abgasreinigungseinrichtung der entsprechende Teil des Abgasstroms einen veränderten NO₂- oder HC-Gehalt aufweisen, wodurch Einfluss auf die Wirksamkeit des Stickoxid-Reduktionskatalysators genommen werden kann. Ferner kann durch die Bypassleitung die Temperatur des dem Stickoxid-Reduktionskatalysator zugeführten Abgases beeinflusst werden, da das umgeleitete Abgas eine Abkühlung erfährt. Es versteht sich, dass stromauf der Abzweigestelle und der Abgasreinigungseinrichtung ein oder mehrere weitere Abgasreinigungselemente wie beispielsweise ein motornaher Oxidationskatalysator oder ein Stickoxid-Speicherkatalysator in der Abgasleitung angeordnet sein können.

Die Zugabe des Reduktionsmittels in die Bypassleitung ermöglicht eine von den Bedingungen in der Abgasleitung weitgehend abgekoppelte Aufbereitung des Reduktionsmittels. Dadurch wird eine gegebenenfalls störende Beeinflussung beispielsweise in Form einer chemischen Umwandlung oder in Form von Kondensationsverlusten vermieden, welche insbesondere durch Abgasreinigungselemente in der Abgasleitung verursacht werden könnten.

Das in der Bypassleitung angeordnete Drosselelement ermöglicht die Aufteilung des Abgasstroms auf die jeweiligen Abgaszweige. Damit ist in vorteilhafter Weise eine Beeinflussung des Aufheizverhaltens der verschiedenen Abgasreinigungselemente ermöglicht. Weiter ist es vorteilhaft, Temperatursensoren in den Abgaszweigen vorzusehen und die Ansteuerung des Drosselelementes in Abhängigkeit von den jeweiligen Temperaturbedingungen in den Abgaszweigen vorzunehmen. Dies ermöglicht beispielsweise eine weiter verbesserte Reduktionsmittelaufbereitung in der Bypassleitung. Vorzugsweise ist das verstellbare Drosselelement stromauf der Reduktionsmittelzugabestelle in der Bypassleitung angeordnet.

In Ausgestaltung der Erfindung ist als Reduktionsmittel eine Flüssigkeit vorgesehen, aus welcher Ammoniak freisetzbar ist. Es kann sich hierbei um eine Lösung von Ammoniumcarbamat oder einer wirkungsähnlichen Substanz handeln. Bevorzugt ist eine wässrige Harnstofflösung als Reduktionsmittel vorgesehen. Die Freisetzung des selektiven Stickoxid-Reduktionsmittels Ammoniak kann noch in der Bypassleitung insbesondere durch Hydrolyse erfolgen. Auf diese Weise ist die Zuführung eines optimal aufbereiteten Reduktionsmittels zum Stickoxid-Reduktionskatalysator ermöglicht.

In weiterer Ausgestaltung der Erfindung ist die Abgasreinigungseinrichtung als Partikelfilter und/oder als Abgaskatalysator, insbesondere als Oxidationskatalysator, ausgebildet. Dies ermöglicht es, zusätzlich zur Stickoxidentfernung durch den Stickoxid-Reduktionskatalysator eine an die jeweiligen motorbedingten Gegebenheiten angepasste weitere Abgasreinigung vorzunehmen. Ist die Abgasreinigungseinrichtung als Partikelfilter ausgebildet, so ist es vorteilhaft, wenn dieser katalytisch beschichtet ist. Auf diese Weise ist eine insbesondere oxidationskatalytische Abgasbehandlung ermöglicht, auch ohne einen speziellen Katalysator hierzu vorzusehen, wodurch Bauraum eingespart wird. Umfasst die Abgasreinigungseinrichtung sowohl einen Partikelfilter als auch einen Abgaskatalysator, vorzugsweise einen Oxidationskatalysator, so ist es insbesondere vorteilhaft, wenn der Oxidationskatalysator mit vergleichsweise geringem Abstand eingangsseitig des Partikelfilters angeordnet ist. Dies erleichtert die Aufheizung des Partikelfilters bei einer thermischen Regeneration mit Wärmeerzeugung durch exotherme Reaktionen im Oxidationskatalysator. In den genannten Fällen bietet die Möglichkeit der Umgehung des Partikelfilters mittels der Bypassleitung insbesondere bei einer thermischen Partikelfilterregeneration Vorteile. Einerseits kann der Abgasdurchsatz durch den Partikelfilter vermindert werden, was die Partikelfilterregeneration erleichtert, andererseits wird bei einer Partikelfilterregeneration der Stickoxid-Reduktionskatalysators weniger stark aufgeheizt, wodurch thermische Schädigungen vermieden werden. An Stelle des Oxidationskatalysators oder zusätzlich zu diesem kann jeweils auch ein Stickoxid-Speicherkatalysator vorgesehen sein.

Insbesondere bei einer Brennkraftmaschine mit niedrigem Partikelausstoß kann gegebenenfalls auf einen Partikelfilter verzichtet werden. Die Abgasreinigungseinrichtung ist in diesem Fall vorzugsweise als Oxidationskatalysator ausgeführt. Durch eine Umgehung des Oxidationskatalysators mittels der Bypassleitung kann insbesondere der NO₂-Gehalt des Abgases eingangsseitig des Stickoxid-Reduktionskatalysators beeinflusst werden. Dadurch kann wiederum die Wirksamkeit des Stickoxid-Reduktionskatalysators verbessert werden, die unter anderem vom NO₂-Gehalt abhängig ist.

Gemäß einer weiteren Ausgestaltung der Erfindung ist die Abgasreinigungseinrichtung als Abgaskatalysator, insbesondere als Oxidationskatalysator ausgebildet und zwischen der Einmündestelle und dem Stickoxid-Reduktionskatalysator ist ein Partikelfilter in der Abgasleitung angeordnet. Es ist daher sowohl eine Umgehung des Abgaskatalysators als auch eine Partikelentfernung im Abgasvollstrom ermöglicht. Die Umgehung des Abgaskatalysators mittels der Bypassleitung ermöglicht insbesondere eine gezieltere Verteilung unverbrannter Kraftstoffbestandteile. Somit ist eine verbesserte Beeinflussung einer Aufheizung des Partikelfilters zur thermischen Regeneration sowie eine Beeinflussung des NO₂-Gehalts im Abgas eingangsseitig des Stickoxid-Reduktionskatalysators ermöglicht.

In weiterer Ausgestaltung der Erfindung ist die Abgasreinigungseinrichtung als Partikelfilter ausgebildet und stromauf der Abzweigestelle ist ein Abgaskatalysator, insbesondere ein Oxidationskatalysator in der Abgasleitung angeordnet. Auch bei dieser Ausgestaltung der Erfindung kann insbesondere die Temperatur des Stickoxid-Reduktionskatalysators durch Steuerung der durch die Bypassleitung strömenden Abgasmenge beeinflusst werden.

In weiterer Ausgestaltung der Erfindung ist die Zugabe des Reduktionsmittels in die Bypassleitung und in die Abgasleitung zwischen der Einmündestelle und dem Stickoxid-Reduktionskatalysator vorgesehen. Diese Ausführungsform erlaubt die wahlweise Aufteilung der zudosierten Reduktionsmittelmenge auf den Abgasteilstrom der Bypassleitung bzw. auf den Abgasvollstrom. Dies ermöglicht eine weiter verbesserte Aufbereitung des Reduktionsmittels unter Berücksichtigung der in den Abgaszweigen vorliegenden Temperatur- und Durchsatzverhältnisse.

In weiterer Ausgestaltung der Erfindung ist der Partikelfilter in einem ersten Gehäuse und der Stickoxid-Reduktionskatalysator in einem zweiten Gehäuse angeordnet. Diese Ausführungsform gewährleistet Flexibilität bei einem Einbau in einem Kraftfahrzeug. Dabei kann vorgesehen sein, sowohl im ersten als auch im zweiten Gehäuse zusätzlich zum Partikelfilter bzw. zum Stickoxid-Reduktionskatalysator einen weiteren Katalysator anzuordnen.

Vorteilhafte Ausführungsformen der Erfindung sind in den Zeichnungen veranschaulicht und werden nachfolgend beschrieben. Dabei zeigen:
- Fig. 1: Eine schematische Darstellung einer ersten Ausführungsform des erfindungsgemäßen Abgassystems,
- Fig. 2: eine schematische Darstellung einer zweiten Ausführungsform des erfindungsgemäßen Abgassystems und
- Fig. 3: eine schematische Darstellung einer dritten Ausführungsform des erfindungsgemäßen Abgassystems.

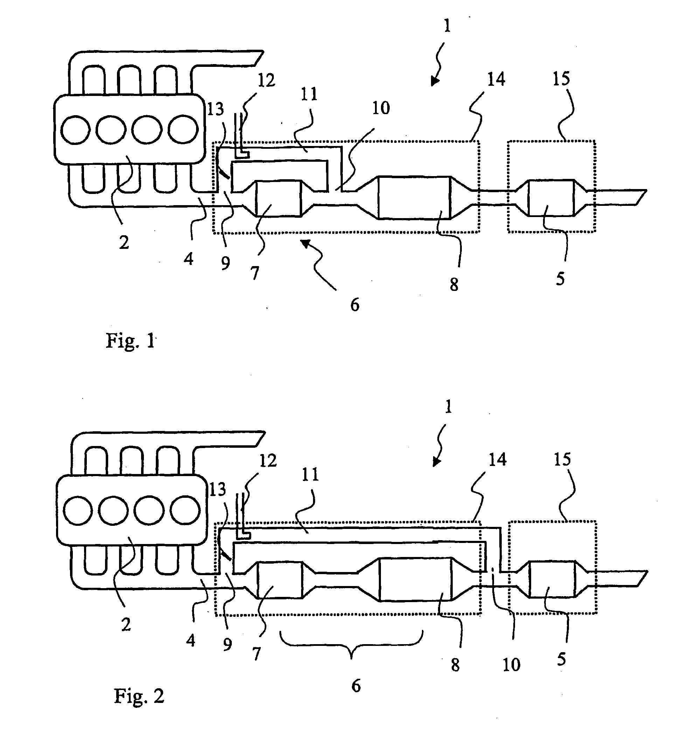

Die in Fig. 1 schematisch dargestellte erste bevorzugte Ausführungsform des erfindungsgemäßen Abgassystems 1 ist an eine Brennkraftmaschine 2 eines nicht dargestellten Kraftfahrzeugs angeschlossen und umfasst eine in einer Abgasleitung 4 angeordnete Abgasreinigungseinrichtung 6 und einen nachgeschalteten Stickoxid-Reduktionskatalysator 5. Die Brennkraftmaschine ist vorzugsweise als Dieselmotor ausgebildet. Als Kraftfahrzeug kommt insbesondere ein Nutzfahrzeug in Betracht.

Die Abgasreinigungseinrichtung 6 umfasst hier als einziges Abgasreinigungselement einen als Oxidationskatalysator 7 ausgebildeten Abgaskatalysator. Für die Abgasreinigungseinrichtung 6 ist eine Bypassleitung 11 vorgesehen, die von einer Abzweigestelle 9 stromauf von der Abgasreinigungseinrichtung 6 von der Abgasleitung 4 abzweigt und an einer Einmündestelle 10 wieder in die Abgasleitung 4 einmündet. Ein verstellbares Drosselelement 13 in der Bypassleitung 11 ermöglicht eine Aufteilung des Abgasstroms auf die Bypassleitung 11 und den parallelen Abgaszweig durch die Abgasreinigungseinrichtung 6. Als weiteres Abgasreinigungselement ist ein Partikelfilter 8 zwischen der Einmündestelle 10 und dem Stickoxid-Reduktionskatalysator 5 in der Abgasleitung 4 vorgesehen. Das Abgassystem 1 umfasst ferner eine Reduktionsmittelzugabeeinrichtung 12 für ein vorzugsweise flüssiges Reduktionsmittel. Dabei ist die Reduktionsmittelzugabeeinrichtung 12 in nicht näher dargestellter Weise an ein Reduktionsmittelreservoir sowie an ein Dosiersystem angeschlossen.

Vorzugsweise ist, wie durch eine gepunktete Umrandung dargestellt, der Oxidationskatalysator 7 und der Partikelfilter 8 in einem gemeinsamen ersten Gehäuse 14 und der Stickoxid-Reduktionskatalysator 5 in einem separaten zweiten Gehäuse 15 angeordnet. Die Gehäuse 14, 15 mit den darin angeordneten Bauteilen wirken dabei zugleich als Schalldämpfer, wobei hierfür zusätzlich weitere schalldämmende Einrichtungen in den Gehäusen 14, 15 vorgesehen sein können.

Nachfolgend wird davon ausgegangen, dass der Stickoxid-Reduktionskatalysator 5 als sogenannter SCR-Katalysator zur selektiven Reduktion von Stickoxiden mittels Ammoniak ausgebildet ist. Dementsprechend wird durch die Reduktionsmittelzugabeeinrichtung 12 dem Abgas des Dieselmotors 2 vorzugsweise eine wässrige Harnstofflösung zugegeben. Insbesondere in der in Fig. 1 dargestellten Ausführungsform des erfindungsgemäßen Abgassystems 1 kann jedoch zusätzlich die Zugabe eines Reduktionsmittels zur Unterstützung einer Regeneration des Partikelfilters 8 vorgesehen sein. Zur Reduktionsmittelzugabe ist eine nicht näher dargestellte Zugabedüse vorgesehen, über welche das Reduktionsmittel fein verteilt in die Bypassleitung 11 gesprüht wird.

Obschon der Partikelfilter 8 prinzipiell eine insbesondere oxidationskatalytisch wirksame Beschichtung aufweisen kann, ist es in der in Fig. 1 dargestellten Ausführung bevorzugt, wenn ein unbeschichteter Partikelfilter eingesetzt wird. Auf diese Weise wird die Oxidation von Harnstoff bzw. Ammoniak beim Überleiten über den Partikelfilter weitgehend vermieden.

In Fig. 2 ist eine weitere vorteilhafte Ausführungsform des Abgassystems 1 dargestellt, wobei die entsprechenden Bauteile, soweit sie mit den Teilen der Fig. 1 übereinstimmen, durch dieselben Bezugszeichen gekennzeichnet sind. Das in Fig. 2 dargestellte Abgassystem ist ähnlich aufgebaut wie das Abgassystem der Fig. 1, weshalb nachfolgend lediglich auf die Unterschiede eingegangen wird.

Die Abgasreinigungseinrichtung 6 des Abgassystems 1 gemäß Fig. 2 umfasst einen als Oxidationskatalysator ausgebildeten Abgaskatalysator 7 sowie einen nachgeschalteten Partikelfilter 8. Die Einmündestelle 10 der die Abgasreinigungseinrichtung 6 umgehenden Bypassleitung 11 ist daher zwischen dem Partikelfilter 8 und dem Stickoxid-Reduktionskatalysator 5 angeordnet. Gegenüber der in Fig. 1 dargestellten Anordnung steht somit eine größere Leitungslänge zur Aufbereitung des Reduktionsmittels zur Verfügung. Das der Stickoxidreduktion dienende Reduktionsmittel muss im Gegensatz zur Anordnung gemäß Fig. 1 zudem nicht durch den Partikelfilter 8 transportiert werden, was ebenfalls einen Vorteil darstellen kann.

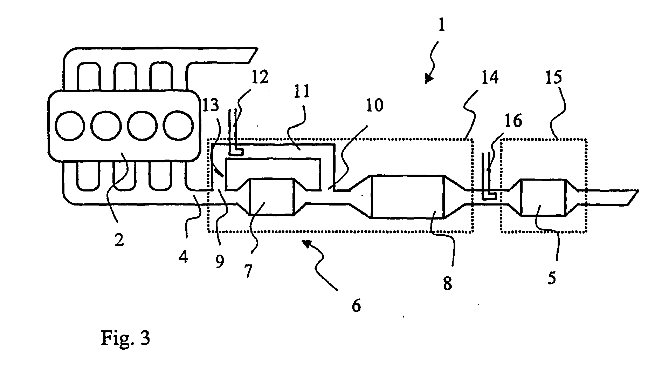

In Fig. 3 ist eine weitere vorteilhafte Ausführungsform des Abgassystems 1 dargestellt, wobei die entsprechenden Bauteile, soweit sie mit den Teilen der Fig. 1 bis 3 übereinstimmen, durch dieselben Bezugszeichen gekennzeichnet sind.

Das in Fig. 3 dargestellte Abgassystem 1 unterscheidet sich von dem Abgassystem der Fig. 1 durch eine zweite Reduktionsmittelzugabeeinrichtung 16 eingangsseitig des Stickoxid-Reduktionskataysators 5. Dies ermöglicht die wahlweise Zugabe des Reduktionsmittels einerseits an einer vom Stickoxid-Reduktionskatalysator 5 entfernten Stelle in den durch die Bypassleitung 11 geleiteten Abgasteilstrom und andererseits an einer nahe am Stickoxid-Reduktionskatalysator 5 gelegenen Stelle in den Abgasvollstrom. Dabei können für die erste Reduktionsmittelzugabeeinrichtung 12 und die zweite Reduktionsmittelzugabeeinrichtung 16 auch unterschiedliche Reduktionsmittel vorgesehen sein.

Nachfolgend wird unter Bezug auf die Fig. 1 bis 3 auf den Betrieb des erfindungsgemäßen Abgassystems eingegangen. Es versteht sich, dass in den lediglich schematisch dargestellten Abgassystemen weitere Bauteile, insbesondere Sensoren für Druck und Temperatur angeordnet sind, um den Betriebszustand des Abgassystems zu erfassen und einzustellen.

So ist es vorzugsweise vorgesehen, die Temperaturen des Oxidationskatalysators 7, des Partikelfilters 8 und des Stickoxid-Reduktionskatalysators 5 zu erfassen und über das Drosselelement 13 die Einstellung des durch die Bypassleitung 11 geleiteten Abgasteilstroms insbesondere in Abhängigkeit von diesen Temperaturen vorzunehmen. Wird beispielsweise festgestellt, dass die Temperatur des Stickoxid-Reduktionskatalysators 5 unterhalb einer vorgegebenen Grenztemperatur liegt, so wird das Drosselelement 13 weitgehend geöffnet und der Abgasstrom daher nahezu vollständig durch die Bypassleitung 11 geleitet. Die Grenztemperatur wird dabei bevorzugt über das Betriebstemperaturfenster des Stickoxid-Reduktionskatalysators festgelegt. Auf diese Weise kann insbesondere bei einem Kaltstart der Brennkraftmaschine 2 eine rasche Erwärmung des Stickoxid-Reduktionskatalysators 5 erfolgen, da Wärmeverluste im Oxidationskatalysator 7 bzw. im Partikelfilter 8 vermieden werden. Der Stickoxid-Reduktionskatalysator 5 erreicht daher vergleichsweise rasch seine bestimmungsgemäße Betriebstemperatur. Ist diese erreicht, wird die Reduktionsmitteldosierung aufgenommen. Die Mengeneinstellung kann dabei kennfeldgesteuert entsprechend der Stickoxidkonzentration des Abgases und des Wirkungsgrads des Stickoxid-Reduktionskatalysators 5 oder sensorbasiert erfolgen. Gleichzeitig wird die Bypassleitung 11 durch Betätigung des Drosselelementes 13 weitgehend geschlossen, so dass nunmehr ein vergleichsweise kleiner Anteil des Abgasstroms durch die Bypassleitung 11 strömt. Somit ist nach Erreichen der Betriebstemperatur des Stickoxid-Reduktionskatalysators 5 sowohl eine Partikelfilterung des gesamten Abgasstroms als auch eine effektive Stickoxidentfernung ermöglicht. Die aufgrund des verminderten Durchsatzes erhöhte Verweilzeit ermöglicht zudem eine wirksame Reduktionsmittelaufbereitung bzw. Harnstoffhydrolyse in der Bypassleitung.

In ähnlicher Weise kann auch vorgesehen sein, die Temperatur des Oxidationskatalysators 7 zur Steuerung der Öffnung der Bypassleitung 11 heranzuziehen. Beispielsweise kann vorgesehen sein, die Wirksamkeit des Oxidationskatalysators 7 durch Erfassen der eingangs- und ausgangsseitig vorhandenen Temperaturen zu ermitteln. Wird festgestellt, dass im Oxidationskatalysator keine Wärmeentwicklung auftritt, so wird die Bypassleitung 11 relativ weit geöffnet. Auf diese Weise erreicht eine vergleichsweise große Abgasmenge unter Vermeidung von Wärmeverlusten den Stickoxid-Reduktionskatalysator 5, so dass dieser rasch auf Betriebstemperatur erwärmt wird.

Da die Wirksamkeit des Stickoxid-Reduktionskatalysators 5 typischerweise vom Konzentrationsverhältnis von NO₂ zu NO im Abgas abhängig ist, kann weiter vorgesehen sein, die Öffnung der Bypassleitung 11 in Abhängigkeit von diesem Verhältnis einzustellen. Für die hierzu benötigten Informationen betreffend die NO₂- und NO-Konzentrationsverhältnisse kann beispielsweise ein Kennfeld vorgesehen sein, welches vorzugsweise den aktuellen Motorbetriebspunkt bzw. die Temperatur des Oxidationskatalysators 7 und/oder des Partikelfilters 8 berücksichtigt. Durch entsprechende Ansteuerung des Drosselelementes 13 wird die Aufteilung des Abgasstroms derart vorgenommen, dass ein mehr oder weniger großer Anteil des im Abgas enthaltenen NO im Oxidationskatalysator 7 zu NO₂ oxidiert wird. Auf diese Weise kann ein für den Stickoxidumsatz günstiges Konzentrationsverhältnis von NO₂ zu NO eingangsseitig des Stickoxid-Reduktionskatalysators 5 eingestellt werden. Vorzugsweise wird ein Verhältnis von eins zu eins angestrebt.

Für die in Fig. 3 dargestellte Ausführungsform ist vorgesehen, die Aufteilung der zudosierten Harnstoffmenge auf die erste Reduktionsmittelzugabeeinrichtung 12 und die zweite Reduktionsmittelzugabeeinrichtung 16 vorzugsweise in Abhängigkeit von der Temperatur des Partikelfilters 8 vorzunehmen. Insbesondere ist es vorteilhaft, oberhalb einer vorgebbaren Grenztemperatur für den Partikelfilter 8 eine Dosierung von Harnstoff vorwiegend oder ausschließlich durch die zweite Reduktionsmittelzugabeeinrichtung 16 vorzunehmen. Auf diese Weise wird die Oxidation vorn Harnstoff bzw. Ammoniak im Partikelfilter 8 vermieden. Dies ist insbesondere von Vorteil, wenn ein katalytisch beschichteter Partikelfilter 8 eingesetzt wird.

Es kann insbesondere für die Ausführungsform der Fig. 3 zusätzlich zur Dosierung von Harnstoff auch eine Dosierung von Kohlenwasserstoffen über die erste Reduktionsmittelzugabeeinrichtung 12 in die Bypassleitung 11 vorgesehen sein. Auf diese Weise kann insbesondere bei einem katalytisch beschichteten Partikelfilter 8 die thermische Partikelfilterregeneration unterstützt werden. In vorteilhafter Weise kann dabei die Temperatureinstellung des Partikelfilters über die Betätigung des Drosselelementes 13 erfolgen, wie generell über eine Aufteilung der Abgasströme durch entsprechende Einstellung des Drosselelementes 13 eine Beeinflussung der Temperaturen der Abgasreinigungselemente 5, 7, 8 des Abgassystems 1 ermöglicht ist.

Es versteht sich, dass insbesondere bei einem mit einer oxidationskatalytisch wirksamen Beschichtung versehenen Partikelfilter 8 für den Abgaskatalysator 7 an Stelle eines Oxidationskatalysators auch ein andersartiger Abgaskatalysator wie beispielsweise ein Stickoxid-Speicherkatalysator vorgesehen sein kann. Es versteht sich ferner, dass insbesondere der Partikelfilter 8 und der Stickoxid-Reduktionskatalysator 5 aus mehreren vorzugsweise strömungsmäßig parallel geschalteten separaten Bauteile aufgebaut sein können.

## Patentansprüche

1. Abgassystem (1), insbesondere für eine Brennkraftmaschine (2) eines Kraftfahrzeugs, mit
- einem in einer Abgasleitung (4) der Brennkraftmaschine (2) angeordneten Stickoxid-Reduktionskatalysator (5),
- einer stromauf des Stickoxid-Reduktionskatalysators (5) angeordneten Abgasreinigungseinrichtung (6),
- einer Bypassleitung (11), welche an einer Abzweigestelle (9) stromauf der Abgasreinigungseinrichtung (6) von der Abgasleitung (4) abzweigt und stromab der Abgasreinigungseinrichtung (6) und stromauf des Stickoxid-Reduktionskatalysators (5) an einer Einmündestelle (10) wieder in die Abgasleitung (4) einmündet und
- einer Reduktionsmittelzugabeeinrichtung (12) zur Zugabe eines Reduktionsmittels in die Bypassleitung (11),
**dadurch gekennzeichnet, dass**
die Bypassleitung (11) stromab der Reduktionsmittelzugabeeinrichtung (12) als Leerrohr ausgebildet ist und ein verstellbares Drosselelement (13) zur Einstellung eines durch die Bypassleitung (11) geleiteten Abgasteilstroms vorgesehen ist.

2. Abgassystem (1) nach Anspruch 1,
**dadurch gekennzeichnet, dass**
als Reduktionsmittel eine Flüssigkeit vorgesehen ist, aus welcher Ammoniak freisetzbar ist.

3. Abgassystem (1) nach Anspruch 1 oder 2,
**dadurch gekennzeichnet, dass**
die Abgasreinigungseinrichtung (6) als Partikelfilter (8) und/oder als Abgaskatalysator (7), insbesondere als Oxidationskatalysator, ausgebildet ist.

4. Abgassystem (1) nach einem der Ansprüche 1 bis 3,
**dadurch gekennzeichnet, dass**
die Abgasreinigungseinrichtung (6) als Abgaskatalysator (7), insbesondere als Oxidationskatalysator ausgebildet ist und zwischen der Einmündestelle (10) und dem Stickoxid-Reduktionskatalysator (5) ein Partikelfilter (8) in der Abgasleitung (4) angeordnet ist.

5. Abgassystem (1) nach einem der Ansprüche 1 bis 3,
**dadurch gekennzeichnet, dass**
die Abgasreinigungseinrichtung (6) als Partikelfilter (8) ausgebildet ist und stromauf der Abzweigestelle (9) ein Abgaskatalysator (7), insbesondere ein Oxidationskatalysator in der Abgasleitung (4) angeordnet ist.

6. Abgassystem (1) nach einem der Ansprüche 1 bis 5,
**dadurch gekennzeichnet, dass**
die Zugabe des Reduktionsmittels in die Bypassleitung (11) und in die Abgasleitung (4) zwischen der Einmündestelle (10) und dem Stickoxid-Reduktionskatalysator (5) vorgesehen ist.

7. Abgassystem (1) nach einem der Ansprüche 3 bis 6,
**dadurch gekennzeichnet, dass**
der Partikelfilter (8) in einem ersten Gehäuse (14) und der Stickoxid-Reduktionskatalysator (5) in einem zweiten Gehäuse (15) angeordnet ist.

## Claims

1. Exhaust gas system (1), in particular for an internal combustion engine (2) of a motor vehicle, with:
- a nitrogen oxide reduction catalyser (5) arranged in an exhaust gas duct (4) of the internal combustion engine (2),
- an exhaust gas purification unit (6) arranged upstream from the nitrogen oxide reduction catalyser (5),
- a bypass line (11) which branches off from the exhaust gas duct (4) at a branching point (9) upstream from the exhaust gas purification unit (6) and then opens again into the exhaust gas duct (4) at an inlet point (10) downstream from the exhaust gas purification unit (6) and upstream from the nitrogen oxide reduction catalyser (5), and
- a reduction medium feed device (12) for feeding a reduction medium into the bypass line (11),
**characterised in that**
downstream from the reduction medium feed device (12) the bypass line (11) is made as an empty pipe and a throttle element (13) is provided for adjusting an exhaust gas flow passing through the bypass line (11).

2. Exhaust gas system (1) according to Claim 1,
**characterised in that**
as the reduction medium a liquid is provided, from which ammonia can be released.

3. Exhaust gas system (1) according to Claims 1 or 2,
**characterised in that**
the exhaust gas purification unit (6) is made as a particle filter (8) and/or an exhaust gas catalyser (7), in particular an oxidation catalyser.

4. Exhaust gas system (1) according to any of Claims 1 to 3,
**characterised in that**
the exhaust gas purification unit (6) is made as an exhaust gas catalyser (7), in particular an oxidation catalyser, and a particle filter (8) is arranged in the exhaust gas duct (4) between the inlet point (10) and the nitrogen oxide reduction catalyser (5).

5. Exhaust gas system (1) according to any of Claims 1 to 3,
**characterised in that**
the exhaust gas purification unit (6) is made as a particle filter (8), and an exhaust gas catalyser (7), in particular an oxidation catalyser, is arranged in the exhaust gas duct (4) upstream from the branching point (9).

6. Exhaust gas system (1) according to any of Claims 1 to 5,
**characterised in that**
the reduction medium is fed into the bypass line (4) and into the exhaust gas duct (4) between the inlet point (10) and the nitrogen oxide reduction catalyser (5).

7. Exhaust gas system (1) according to any of Claims 3 to 6,
**characterised in that**
the particle filter (8) is accommodated in a first housing (14) and the nitrogen oxide reduction catalyser (5) is accommodated in a second housing (15).

## Revendications

1. Système d'échappement (1), en particulier pour un moteur à combustion interne (2) d'un véhicule à moteur, avec
- un catalyseur de réduction d'oxyde d'azote (5) disposé dans le conduit d'échappement (4) du moteur à combustion interne (2),
- un dispositif d'épuration de gaz d'échappement (6) disposé en amont du catalyseur de réduction d'oxyde d'azote (5),
- un conduit de dérivation (11), lequel part du conduit d'échappement (4) au niveau d'une zone de dérivation (9) en amont du dispositif d'épuration de gaz d'échappement (6) et qui débouche dans le conduit de gaz d'échappement (4) au niveau d'une zone d'arrivée (10) en amont du catalyseur de réduction d'oxyde d'azote (5) et
- un dispositif d'apport d'agent de réduction (12) servant à acheminer un agent de réduction dans le conduit de dérivation (11),
**caractérisé en ce que**
le conduit de dérivation (11) en aval du dispositif d'apport d'agent de réduction (12) est conçu en tant que tube vide et un élément d'étranglement (13) réglable est prévu pour régler un écoulement partiel de gaz d'échappement conduit au travers du conduit de dérivation (11).

2. Système d'échappement (1) selon la revendication 1, **caractérisé en ce qu'**un liquide est prévu en tant qu'agent de réduction, qui peut dégager de l'ammoniac.

3. Système d'échappement (1) selon la revendication 1 ou 2, **caractérisé en ce que** le dispositif d'épuration de gaz d'échappement (6) est conçu en tant que filtre à particules (8) et / ou en tant que catalyseur de gaz d'échappement (7) en particulier en tant que catalyseur à oxydation.

4. Système d'échappement (1) selon l'une quelconque des revendications 1 à 3, **caractérisé en ce que** le dispositif d'épuration de gaz d'échappement (6) est conçu en tant que catalyseur de gaz d'échappement (7) en particulier en tant que catalyseur à oxydation et un filtre à particules (8) est disposé entre la zone d'arrivée (10) et le catalyseur de réduction d'oxyde d'azote (5) dans le conduit d'échappement (4).

5. Système d'échappement (1) selon l'une quelconque des revendications 1 à 3, **caractérisé en ce que** le dispositif d'épuration de gaz d'échappement (6) est conçu en tant que filtre à particules (8) et en amont de la zone de dérivation (9) un catalyseur de gaz d'échappement (7), en particulier un catalyseur à oxydation est disposé dans le conduit d'échappement (4).

6. Système d'échappement (1) selon l'une quelconque des revendications 1 à 5, **caractérisé en ce que** l'apport d'agent de réduction dans le conduit de dérivation (11) et dans le conduit de gaz d'échappement (4) est prévu entre la zone d'arrivée (10) et le catalyseur de réduction d'oxyde d'azote (5).

7. Système d'échappement selon l'une quelconque des revendications 3 à 6, **caractérisé en ce que** le filtre à particules (8) est disposé dans un premier carter (14) et le catalyseur de réduction d'oxyde d'azote (5) est disposé dans un second carter (15).
